# EUROPEAN PATENT APPLICATION

(11) **EP 3 392 785 A1**
(43) Date of publication of application: **24.10.2018**
(21) Application number: 17167339.5
(22) Date of filing: 20.04.2017
(51) Int. Cl.: G06F 17/30

(54) **METHOD FOR EVALUATION OF DIFFERENCES BETWEEN A FIRST INSTANCE AND A SECOND INSTANCE OF A SYSTEM, METHOD FOR CARRYING OUT A VALIDATION CHECK OF DATA OF A SYSTEM, UNIVERSAL DATA MODEL AND USE OF THE DATA MODEL**

(71) Applicant: Thales Management & Services Deutschland GmbH, 71254 Ditzingen (DE)
(72) Inventor: Dr. Schaal, Martin, 71272 Renningen (DE)
(74) Representative: Kohler Schmid Möbus Patentanwälte

(57) **Abstract**

The invention concerns a method for evaluation of differences first data and second data of a system, in particular of a safety critical system, wherein the first and second data are provided in form of or transformed to UDM-formatted instances (UDM1, UDM2), i.e. each instance comprises a first uniment (U1) and a second uniment (U2) and a relation (R12), wherein the uniments (U1, U2) each describe an element of the system and wherein the relation (R12) connects exactly two uniments by pointing from the first uniment (U1) to the second uniment (U2); and wherein an UDM-formatted amendment instance (UDM_D) is generated by applying a difference tool (UDM_DT) to the first and second input instance (UDM1, UDM2), wherein the amendment instance (UDM_D) comprises all uniments (U1, U2) and relations (R12) of one of the input instances (UDM1, UDM2) and a differentiator (D), which indicates the difference of the two input instances (UDM1, UDM2). The inventive method which can be carried out fast and uncomplicated.

## Description

### Background of the invention

The invention relates to a method for evaluation of differences between first data and second data of a system, a method for carrying out a validation check of data of a system, an universal data model and an use of the data model.

Systems like railway systems, nuclear power systems etc. usually work with a multitude of different products, e.g. products from different manufactures, in particular if the system is operated globally. For correct operation of the system it is essential to ensure compatibility between the products. Thus validation of compliance of rules and comparison of data are important points for operating the system.

In a railway system for example different products which have to be interconnected are e.g. interlocking, user interface, point, axle counter, automatic route setting equipment etc. Prior to interconnection of the products a validation check has to be carried out in order to ensure proper operation.

Further, new releases of parts of the system, e.g. of new network router software, new checks for automatic route settings in interlockings, new human machine interfaces due to customer needs may cause problems e.g. due to different definitions which are used in the different releases. Therefore, amendments between an old and a new release have to be determined in order to decide whether the new release is compatible with the system.

To prevent malfunctions and misunderstandings between different products or due to new releases data validation and compatibility checks have to be carried out. Yet, different products and different releases may provide data in its own data format and use different data bases. Validation checks and evaluation of differences are carried out manually which is laborious and prone to error.

In several railway applications RailML (Railway Markup Language) is used for data exchange between different products. RailML comprises "items". Each item describes an environment (i.e. an element of a system or a product or a component and the relations of the respective element to other elements). If one element has to be removed, each item concerning the respective element has to be modified. Thus the data management is quite complicated.

### Object of the invention

It is therefore an object of the invention to provide a method for evaluation of differences and a method for validation and an according data model which allows these methods to be carried out fast and uncomplicated.

### Description of the invention

This object is achieved by a method for evaluation of differences according to claim 1, a method for carrying out a validation check of data of a system according to claim 5 , an universal data model according to claim 14 and the use of the data model according to claim 15.

According to the invention the first and second data set are provided in form of UDM-formatted instances, i.e. each instance comprises a first uniment and a second uniment and a relation, wherein the uniments each describe an element of the system and wherein the relation connects exactly two uniments by pointing from the first uniment to the second uniment. An UDM-formatted amendment instance is generated by applying a difference tool to the first and second instance, wherein the amendment instance comprises all uniments and relations of one of the instances and a differentiator, which indicates the differences of the two instances.

Preferably the uniments of first and second UDM-formatted instances describe the same element (edge, node, switch, signal, station, detection point, cable, battery, country, time table, person, motor, ...) form the view of different products (interlocking, user interface, axle counter) or releases. For example, first and second instances can comprise data of different releases or data of different products concerning the same elements.

In particular in large projects systems of different manufactures are interconnected, which is called "system of systems". At a top level the relations according to the invention connect the different systems; at a level below top level relations connect products; and again a level below relations connect objects of the products. Relations between different levels are also possible.

"Foreign data" means that data are not UDM-formatted, i.e. do not comply with the afore mentioned features, in particular where data is not provided in uniments and relations, wherein uniments do not include relations between elements.

Further features of UDM-formatted instances are described below in connection with the universal data model.

By providing instances e.g. of different products or different releases in the inventive uniform data format of the inventive universal data model (UDM) data from a multitude of products can be easily compared and processed. An instance can describe e.g. a system of systems, a system, a product or a component.

In order to determine the fulfilment of safety requirements a preferred variant of the inventive method is proposed, in which the difference tool is applied to the generated amendment instance, thereby generating two UDM-formatted reconstructed instances, and the reconstructed instances are compared with the first and second instances, wherein the amendment instance is classified to be reliable if one of the reconstructed instances complies with the first input instance and the other reconstructed instance complies with the second input instance (difference analysis). By using the amendment instance (including the differentiator) as input for the difference tool first and second UDM instances can be reconstructed. If the method works properly the reconstructed instances comply with the first and second instances. Two instances comply with each other if e.g. they have the same checksum, in particular have the same MD5 hash value.

In a highly preferred variant a difference report is generated in addition to the amendment instance by applying the difference tool to the first and second instance, the report comprising only information concerning deleted, added, modified uniments and/or relations. The report is preferably issued in a human readable format, i.e. a format which is commonly used for text processing (word, pdf...). The report does not contain any information concerning elements which the two instances have in common (i.e. no unchanged elements) but only contains new, deleted and modified content.

In order to determine the fulfilment of safety requirements another preferred variant of the inventive method is proposed, in which the difference tool is applied to the difference report and to one of the first or second instance, thereby generating a further reconstructed instance, and the further reconstructed instance is compared with the UDM formatted instance (of the first and second UDM-formatted instances), which has not been used for the further reconstruction, wherein the difference report is classified to be reliable if the further reconstructed instance complies with the UDM formatted instance (of the first and second UDM-formatted instances), which has not been used for the further reconstruction. Thereby it can be proved that all differences are found and issued with the difference report. Thus fulfilment of safety requirements can be determined.

In case that the first and second data are provided as foreign data it is preferred that the UDM-formatted input instances are generated from the foreign data by applying a first transformer to the foreign data. A transformer according to the invention is a transformer function which transforms data from an existing legacy data format into data which are UDM-formatted or vice versa. "Foreign data" means data which are not UDM-formatted (e.g. xml, ASCII, binary files, data base export)

In particular it is highly preferred that the instances generated by applying the first transformer are first diverse instances; that further diverse instances are generated by applying a second transformer to the same foreign data; and that the UDM-formatted diverse first instances and the corresponding UDM-formatted further diverse instances generated from the same foreign data are compared, in particular by applying a MD5 check. If the comparison shows no differences between the instances (which are generated from the same foreign data by means of applying different transformers), the generated UDM-formatted instances are deem to be reliable. By applying different transformers and comparing the results correct transformation can be reliably ensured.

Preferably the different transformers use different methods and/or are executed with different operating systems. The transformers may use transforming method such as XSLT (Extensible Stylesheet Language Transformations, ANTLR4 (pronounced Antler), Epsilon and may be executed with operating systems such as LINUX, Microsoft, OS2.

The invention further concerns a method for carrying out a validation check of data of a system, in particular of a safety critical system, wherein the data are provided in form of or transformed to an UDM-formatted input instance comprising uniments and relations, wherein the uniments each describe an element and wherein the relations each connect exactly two uniments, the method comprising: generating a validation instance by means of a validation tool to the UDM-formatted instance, wherein a validation rule is applied to the uniments and/or relations of the instance and wherein the validation instance comprises a validation uniment which comprises the validation rule.

The validation instance is generated by applying the validation tool to the uniments and relations of the UDM-formatted input instance. The validation instance comprises the validation uniment in addition to the uniments and relations of the input instance. First the data of an UDM-formatted instance then a set of validation rules are read. The read set of validation rules is applied to the UDM-formatted instance.

The validation rule is structured in UDM-format, namely as uniment. Accordingly the validation uniment is of the type "ValidationRule".

The validation tool is the implementation of the validation rule. When the validation tool is applied to the input instance different methods may be used, such as Eclipse Modelling Framework Validate, Method B, Epsilon. In order to achieve SIL4 proved data it is preferred to use two or three methods for the same validation rule to have a diverse approach.

In case a uniment of the instance to be validated is affected by a failure a preferred variant of the inventive validation method provides that a validation relation is generated and the validation relation is added to the validation instance, wherein the validation relation points from the affected uniment (uniment which does not fulfil the validation rule of the validation uniment) to the validation uniment. The validation relation (assigned validation pointer) is a relation of the type "violates validation rule", In case a relation of the instance to be validated is affected by a failure another preferred variant of the inventive validation method provides that the uniment from which the affected relation starts is identified; and a validation relation is generated and added to the validation instance, wherein the validation relation points from the identified uniment to the validation uniment.

In case that a violating uniment or relation has been detected, different actions can be carried out:
Violations are recorded by means of the validation tool by creating a validation instance and a report which is in a human readable format. The validation instance is an extended UDM-formatted instance comprising the validation relation.

In a first variant, the instance (comprising the affected uniment or relation) is corrected and an evaluation of differences as described before is carried out, wherein the first input instance is the instance with the affected uniment and/or relation and the second input instance is the corrected instance.

In some cases a correction of the instance is not possible. Therefore in a second variant an exception uniment is created. The exception uniment is added to the validation instance with the affected uniment and an exception relation is created which points from the exception uniment to the affected uniment. The exception uniment "heals" the rule violation and should include a reason for exception. In case of an affected relation the exception relation points to the uniment where the affected relation starts.

In a third variant the validation rule is changed, in case the number of affected uniments exceeds a predefined number. If the number of affected uniments exceeds a predefined number it can reasonably be concluded that the validation rule is not reasonable are incorrectly implemented and has to be adapted/corrected. This action requires a documented review process.

The invention also concerns an universal data model for providing data in form of an UDM-formatted instance, wherein the UDM-formatted instance comprises at least two uniments and at least one relation, wherein the uniments each describe an element, wherein the relation connects exactly two uniments.

The inventive universal data model provides data in the form of uniments and relations between the uniments. Uniments and relations concerning data of different products can be stored in a common data base.

Each uniment and each relation has an unique ID (in particular a global unique identifier) and a type, e.g. signal, track, edge, detection point (for uniments) and signal-to-track, cable-to-cabinet, train-to-timeTable (for relations) which describes the element or the related elements respectively. Uniments and relations can have properties which are written in a standardized way (template). Properties describe e.g. position of one element relative to another element, length GPS.longitude GPS.latitude grafic.pixel.x and y, color, IP-Address, module-address, HW-item-nr. According to the invention uniments do not include any relations, i.e. no uniment has any information about relations to other uniments. Relationships between uniments are exclusively described by relations.

The relation comprises information concerning the ID of the two uniments which are related by the relation, i.e. each relation has a "from"-ID = ID of uniment where the relation starts and a "to"-ID = ID of uniment where the relation ends. The inventive universal data model exclusively uses 1:1 relations.

The UDM-formatted instance can be generated by transforming foreign data by means of a transformer as described above and can be inverse transformed to foreign data, e.g. after having carried out a difference analysis and/or validation check. Thus, old systems which cannot deal with UDM-formatted data can be used while benefitting from the UDM-formatted data for validation and difference evaluation.

The UDM-formatted instances according to the inventive data model do not need anything else than uniments and relations. Thus it is highly preferred that the instance consists only of uniments and relations.

The inventive UDM data model allows a high degree of automation thereby realizing quick data processing and reducing the effort for data generation and validation.

The invention also concerns the use of the afore described data model for data preparation, data difference analysis, data validation, data configuration or data approval for a detection process, a display process, a control process, a disposition process or a supervision process, in particular within a safety critical system. Due to the UDM-structure, a restoration of the original old and new data from the UDM-formatted difference output data is possible. Furthermore difference analysis is possible not only for text data but also for image data.

It is highly preferred to use the inventive data model within a railway system. Other advantageous applications are the use within systems where data of different products have to be reliably combined or considered, e.g. in power stations, traffic supervision, water management or medical devices. The inventive data model can be used with any system which deals with objects and relation between these objects.

According to the invention the inventive universal data model is used in methods for difference analysis and validation analysis. I.e. the data used for the respective analysis is provided in UDM-format or (if provided in foreign data) is transformed to UDM-formatted data. The inventive data model allows providing common project data from different products, i.e. different products (e.g. interlocking, user interface, axle counter) can deposit attributes to different elements (points, track segment, edge, node) in a common data supply. Automatic difference analysis and validation analysis can be easily carried out by using the inventive universal data model.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawings.
- Fig. 1: shows the generation of an UDM-formatted instance by means of an UDM "forward" transformer;
- Fig. 2: shows the generation of legacy data by applying an UDM "backward" transformer to the UDM-formatted instance of fig. 1;
- Fig. 3: shows the generation of an UDM-formatted instance by means of an UDM 1d(=1 direction)-1t(=1 technology)-transformer.
- Fig. 4: shows the generation of an UDM-formatted instance by means of an UDM 1d(= 1 direction)-2t(=2 technologies)-transformer.
- Fig. 5: shows a method for verification of fulfilment of safety requirement for the 1d-2t-transformer.
- Fig. 6: shows the process steps of application of a 2d-1t-transformer.
- Fig. 7: shows method for verification of fulfilment of safety requirement for the 2d-2t-transformer of fig. 6.
- Fig. 8: shows the generation of an amendment instance and a difference report evaluation of differences of two input UDM-formatted instances according to the invention by applying a difference tool..
- Fig. 9: shows a first variant of reconstruction of input UDM-formatted instances.
- Fig. 10: shows a first variant of a verification of fulfilment of safety requirement for the difference tool of fig. 8 based on reconstructed input UDM-formatted instances of fig. 9.
- Fig. 11: shows a second variant of reconstruction of input UDM-formatted instances.
- Fig. 12: shows a second variant for a verification of fulfilment of safety requirement for the difference tool of fig. 8 based on reconstructed input UDM-formatted instances of fig. 11.
- Fig. 13: shows a method for carrying out a validation check according to the invention.
- Fig. 14: shows the relationship between uniments and relation.
- Fig. 15: shows a UDM-formatted instance with uniments and relations.
- Fig. 16: shows the generation of a UDM-formatted validation instance during a validation check as shown in fig. 13.
- Fig. 17: shows the violation of an uniment during a validation check as shown in fig. 13.
- Fig. 18: shows the violation of a relation during a validation check as shown in fig. 13.

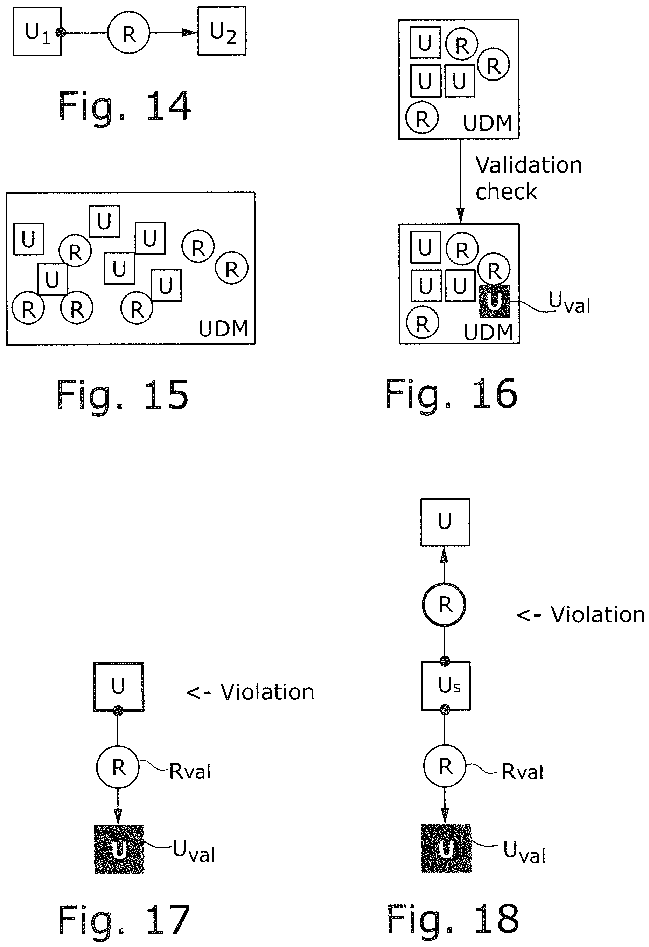

The UDM data model according to the invention provides data in form of UDM-formatted instances **UDM** (hereinafter also referred to as "UDM data". Each UDM-formatted instance UDM comprises at least two uniments **U1, U2** and at least one relation **R** as shown in **fig. 15****.** The relation R connects the uniments U1**,** U2 as shown in **fig. 14****.** Preferably each UDM-formatted instance UDM consists of uniments U1**,** U2 and relations R without any additional information. Each UDM-formatted instance UDM uses the same schema definition. The UDM instances UDM can be stored in an xml-file or in a data base.

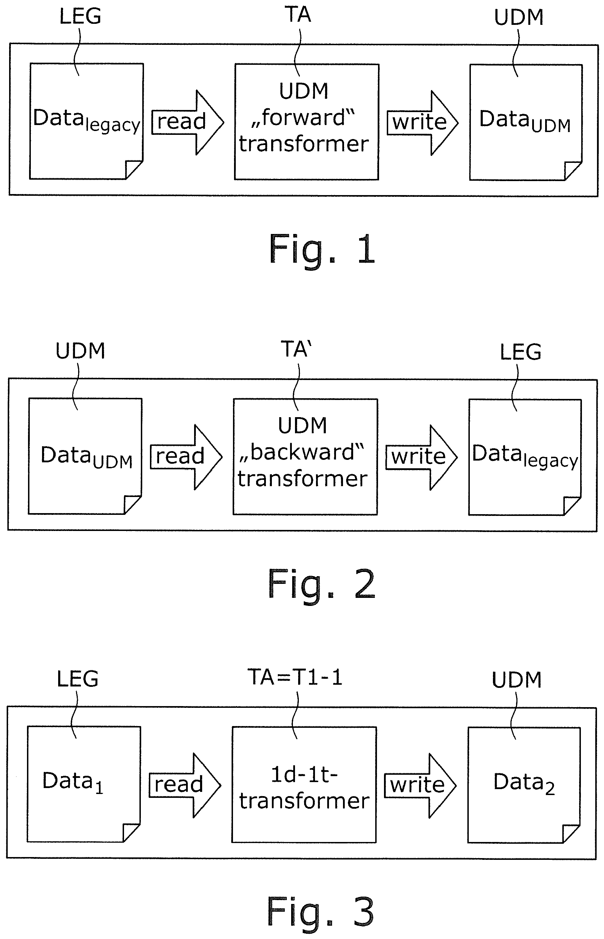

An UDM-formatted instance UDM is generated by transforming foreign data **LEG** from an existing legacy data format into UDM-formatted instance UDM by means of a "forward" transformer **TA** as shown in **fig. 1****.**

By means of a UDM "backward" transformer **TA'** an UDM-formatted instance can be transformed into foreign data which are not UDM-formatted, as shown in **fig. 2****.**

In principle the transformation can be carried out by means of a 1d-1t-transformer **T1-1,** as shown in **fig. 3****.** The 1d-1t-transformer T1-1 transforms foreign data LEG in one direction into an UDM-formatted instance UDM and uses one transformer technology only. Yet, for a 1d-1t-transformer T1-1 e.g. a T3 certification according to CENELEC who is responsible for European standardization in the area of electrical engineering is not possible.

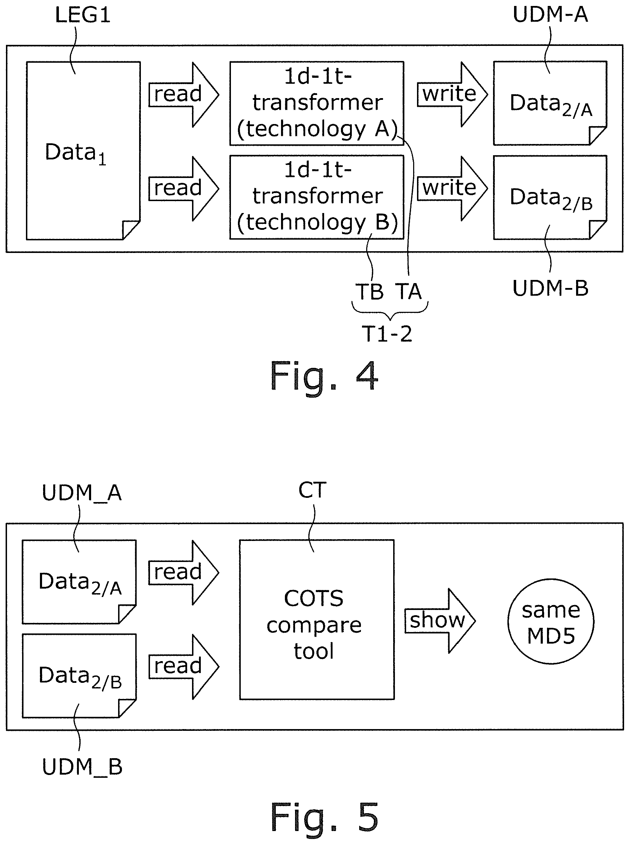

This problem can be solved by using an UDM 1-2-transformer **T1-2,** as shown in **fig. 4****.** The 1-2-transformer T1-2 transforms foreign data LEG in one direction by using two diverse transformer technologies (1-1 transformer TA and 1-1 transformer **TB**). Two UDM-formatted instances **UDM**_**A** and **UDM_B** are generated.

The two UDM-formatted instances UDM_A and UDM_B can now be compared by means of a compare tool **CT,** in particular by checking whether the both UDM-formatted instances UDM_A, UDM_B have the same MD5, as shown in **fig. 5****.** In case of same MD5 for both UDM-formatted instances UDM_A, UDM_B it's proven, that both UDM-formatted instances UDM_A, UDM_B contain all information of the foreign data LEG. Thus, by using different transformer technologies it can be ensured that no information is lost during the transformation. If both UDM-formatted instances UDM_A, UDM_B have the same MD5 a T3 certification according to CENELEC is possible.

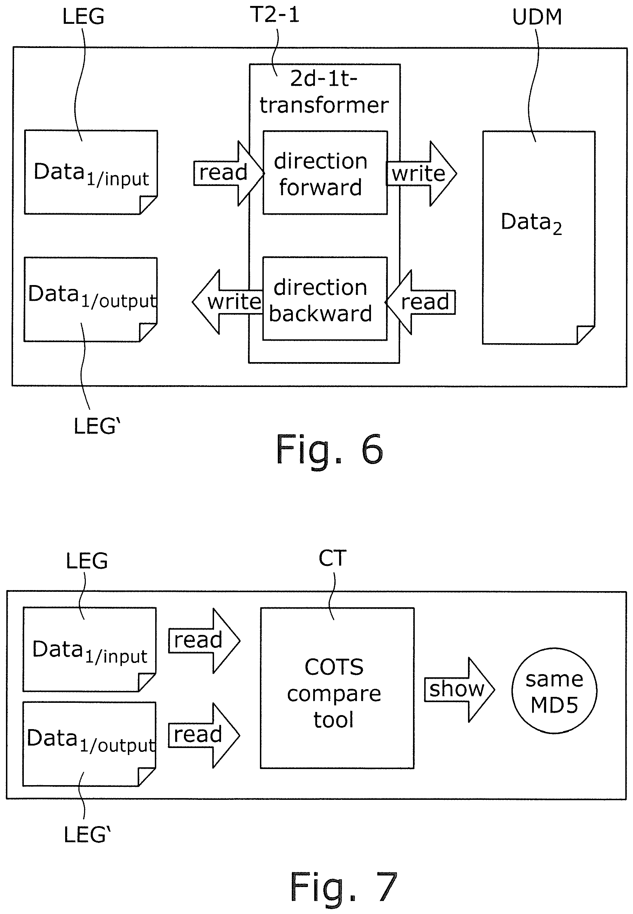

**Fig. 6** shows a UDM transformation by using a 2d-1t-transformer **T2-1.** The 2d-1t-transformer T2-1 transforms in a first step foreign input data LEG in forward direction into UDM-formatted data UDM. In a second step the UDM-formatted data UDM is transformed by the 2d-1t-transformer **T2-1** backward direction into output foreign data **LEG'.** Carrying out a UDM transformation with a 2d-1t-transformer T2-1 is mathematically safe. No additional test has to be carried out. Thus using a 2d-1t-transformer T2-1 is a highly preferred variant of the inventive methods for generating UDM-formatted instances from foreign data.

Input foreign data LEG and output foreign data LEG' can now be compared by means of compare tool CT, in particular by checking whether both foreign data LEG, LEG' have the same MD5, as shown in **fig. 7**

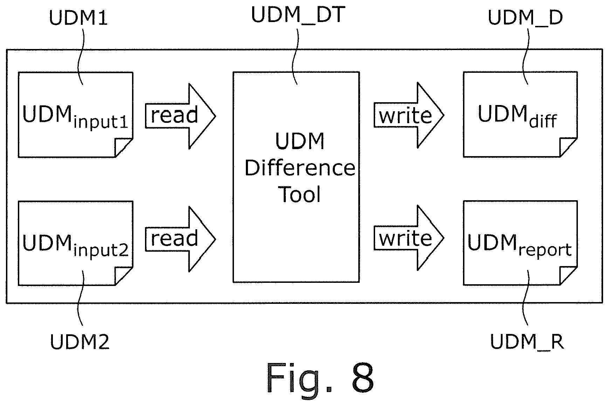

In case of same MD5 for both foreign data LEG, LEG' it's proven, that output foreign data LEG' and thus also UDM-formatted instance UDM contain all information of input foreign data LEG. That means that safety requirement Transform-001 is fulfilled. Thus, if both foreign data LEG, LEG' have the same MD5 a T3 certification according to CENELEC is possible. Different variants of the inventive method for evaluation of differences between a first UDM-formatted instance **UDM1** and a second instance UDM-formatted instance **UDM2** are shown in figs. 8 - 12.

The two UDM-formatted instances UDM1, UDM2 are preferably generated from different foreign data. According to the invention a UDM difference tool **UDM_DT** is applied to the UDM-formatted instances **UDM1, UDM2.** The UDM difference tool UDM_DT reads the first UDM instance UDM1 and second UDM instance UDM2 (input instances) and detects all differences between the first UDM instance UDM1 and second UDM instance UDM2, i.e. all deleted, added or modified uniments and relations. As shown in **fig. 8** the difference tool UDM_DT writes an amendment instance **UDM_D** with contains all changed (deleted, added or modified) uniments and relations and unchanged uniments and relations of the two input UDM instances UDM1, UDM2. The amendment instance **UDM_D** is also UDM-formatted. Preferably the difference tool UDM_DT further writes a human readable difference report **UDM_R** comprising information concerning all changed (deleted, added, modified) uniments and relations. The difference report UDM_R does not contain information concerning unchanged uniments and relations. The difference report is preferably not UDM-formatted but uses e.g. comments, tables etc.) in order to be provided to people without XML knowledge.

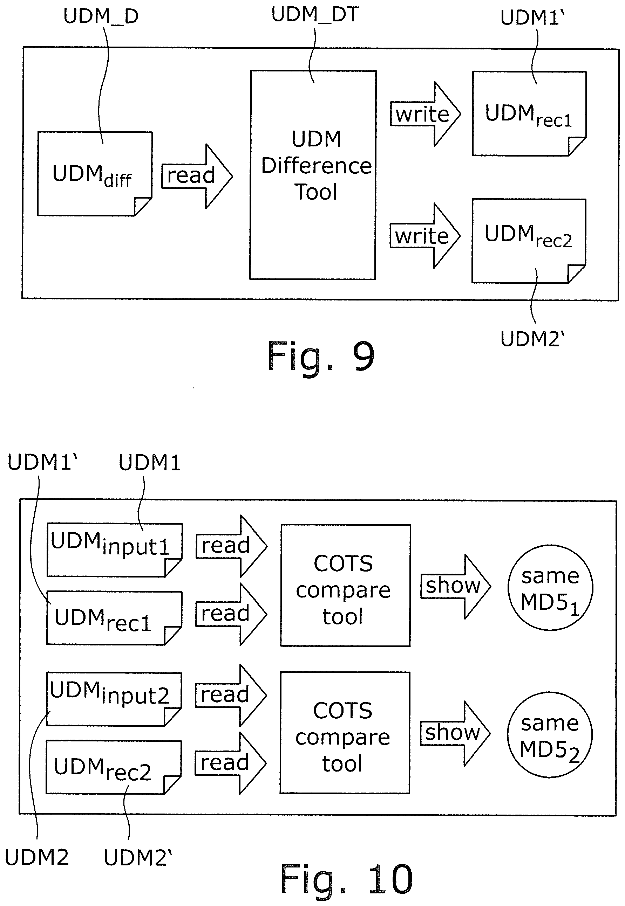

For purpose of verification of the correct operation of the difference tool UDM_DT the amendment instance UDM_D can be read by means of the difference tool UDM_DT and the difference tool UDM_DT can re-construct the two input UDM instances resulting in first and second reconstructed UDM instances **UDM1', UDM2',** as shown in **fig. 9****.**

First UDM instance UDM1 and first reconstructed UDM instances UDM1' can now be compared by means of compare tool CT, in particular by checking whether first UDM instance UDM1 and first reconstructed UDM instance UDM1' have the same MD5₁. Accordingly second UDM instance UDM2 and second reconstructed UDM instance UDM2' can be compared by means of compare tool CT, in particular by checking whether second UDM instance UDM2 and second reconstructed UDM instances UDM2' have the same MD5₂, as shown in **fig. 10****.**

In case of same MD51 for the first UDM-formatted instance and the first reconstructed UDM-formatted instance and in case of same M52 for second UDM instance UDM2 and second reconstructed UDM instance UDM2' it's proven, that amendment instance UDM_D contains all differences and also all unchanged information of both UDM-formatted input instances UDM1, UDM2. That means safety requirement are fulfilled. Thus certification according to CENELEC or the like is possible.

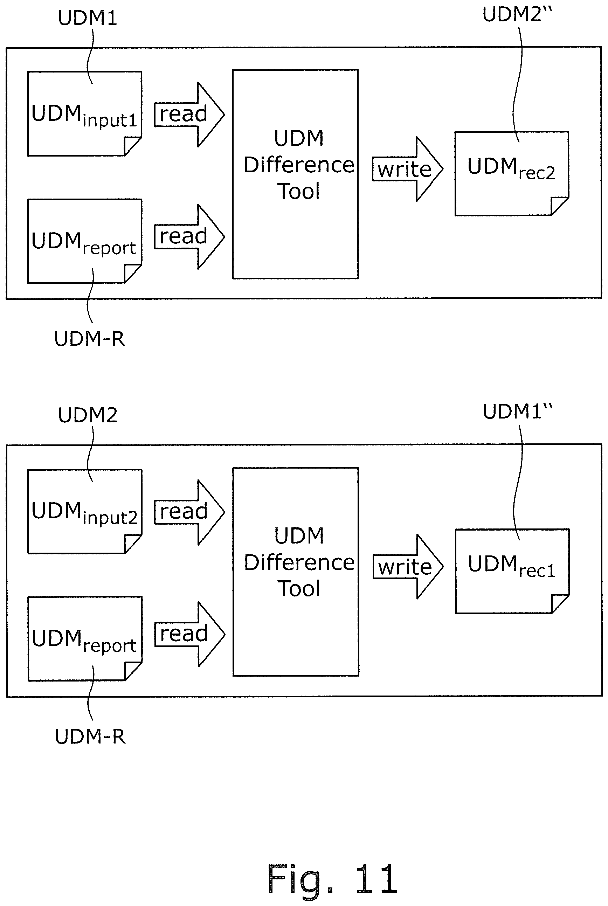

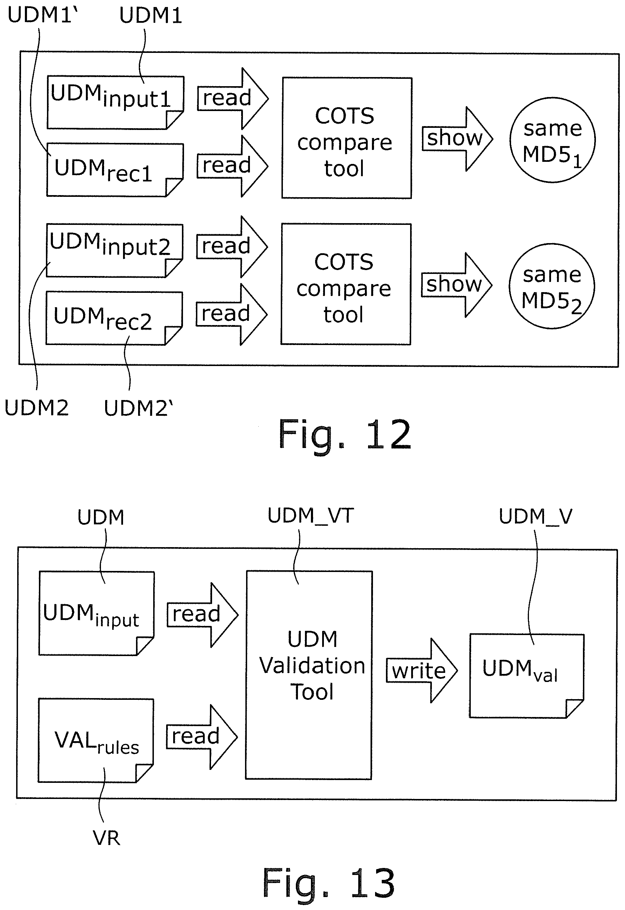

Another variant for verifying the correct operation of the difference tool UDM_DT is shown in **figs. 11****,** **12****.** The difference tool UDM_DT reads the human readable difference report UDM_R (with all amended uniments and relations) and one of the UDM-formatted input instance. The difference tool UDM_DT is adapted to produce a reconstruction of the other of the two input instances. The input UDM-formatted instances and the corresponding reconstructed UDM-formatted instances can now be compared by means of a compare tool UDM_CT. In case of same MD5₁ for the first UDM-formatted instance UDM1 and the first reconstructed UDM instance UDM1" and in case of same M5₂ for second UDM instance UDM2 and second reconstructed UDM instance UDM2" it's proven, that the human readable difference report UDM_R contains all differences between the two instances. That means safety requirement are fulfilled. Thus certification according to CENELEC or the like is possible.

**Fig. 13** shows a method for carrying out a validation check of UDM-formatted instance **UDM** (input instance). A UDM validation tool UDM_VT is provided which is adapted for automatic execution of data tests. The input instance UDM as well as one or more validation rules **VR** are read by the UDM validation tool UDM_VT. The validation rules VR are provided in form of uniments according to the inventive data model. The UDM validation tool UDM_VT applies the validation rules VR to the input instance UDM and generates (writes) an UDM-formatted validation instance **UDM**_**V**, which contains all data validation results, which result from the application of the validation rules to the input instance UDM.

In case of a violation of a validation rule VR the validation instance **UDM_V** comprises in addition to the uniment and relations of the input instance UDM an additional validation uniment **U_{VAL}** and (if necessary) an additional validation relation **Rᵥₐₗ:**
In case a uniment U of the input instance UDM violates a validation rule VR the violating uniment U is the start of the validation relation R_{Val} of type "violatesRule" which is configured such that it points to the additional validation uniment U_{VAL} of type "ValidationRule" as shown in **fig. 17****.** In case no uniment is affected by a failure the validation rule uniment is not related to any uniment to be validated (no validation relation is generated).

In case a relation R of the input instance UDM violates a validation rule VR the validation tool UDM_V determines the uniment **U_{S}** from which the violating relation R starts. The additional validation relation Rᵥₐₗ is then configured such that it starts at the detected uniment **U_{S}** and ends at the validation uniment U_{VAL}, as shown in **fig. 18****.**

The UDM validation tool UDM_VT is preferably adapted to detect all violations of a the applied validation rules and to detect whether a complete set of validation rules for a specific project has been applied to the input instance UDM used in a specific project. This can realized by using different validation methods, e.g. Eclipse Modelling Framework Validate, Method B, Epsilon.

In order to have a diverse approach (data in SIL4 context) it is preferred to use two or more methods for applying the same validation rule.

The inventive data model and methods allow lossless data generation and testing with low effort across all products. The instances can be used for different products, even since the instances are provided in the same UDM-format. A new element can be added easily considered by simply adding a new uniment (the according relations if necessary) to the instance once. There is no need to add the element to each product of the system.

### List of reference signs

- CT: compare tool
- LEG: foreign (legacy) data
- LEG': further foreign (legacy) data
- R: relation of a UDM-formatted instance
- Rᵥₐₗ: validation relation pointing to validation uniment
- TA: first UDM (forward) transformer
- TA': UDM backward transformer
- TB: second UDM (forward) transformer
- UDM: UDM-formatted instance (UDM data)
- UDM1, UDM2: UDM-formatted input instances
- UDM1', UDM2': UDM-formatted reconstructed instances (reconstructed from amendment UDM-formatted instance)
- UDM1", UDM2": further UDM-formatted reconstructed instances (reconstructed from UDM report and input UDM-formatted instance)
- UDM_A: first UDM-formatted diverse instance generated by applying first UDM transformer
- UDM_B: further UDM-formatted diverse instance generated by applying second UDM transformer
- UDM_D: amendment UDM-formatted instance generated by applying UDM difference tool to two UDM-formatted instances (UDM data)
- UDM_DT: UDM difference tool
- UDM_R: UDM report
- UDM_VT: UDM validation tool
- VR: validation rule
- U: uniment of a UDM-formatted instance
- UDM_V: UDM-formatted validation instance
- U_{S}: uniment where violating relation starts
- U_{VAL}: validation uniment

## Claims

1. Method for evaluation of differences first data and second data of a system, in particular of a safety critical system,
wherein the first and second data are provided in form of or transformed to UDM-formatted instances (UDM1, UDM2), i.e. each instance comprises a first uniment (U1) and a second uniment (U2) and a relation (R12), wherein the uniments (U1, U2) each describe an element of the system and wherein the relation (R12) connects exactly two uniments by pointing from the first uniment (U1) to the second uniment (U2); and
wherein an UDM-formatted amendment instance (UDM_D) is generated by applying a difference tool (UDM_DT) to the first and second input instance (UDM1, UDM2), wherein the amendment instance (UDM_D) comprises all uniments (U1, U2) and relations (R12) of one of the input instances (UDM1, UDM2) and a differentiator (D), which indicates the difference of the two input instances (UDM1, UDM2).

2. Method according to claim 1, **characterized in**
**that** the difference tool (UDM_DT) is applied to the generated amendment instance (UDM_D), thereby generating two UDM-formatted reconstructed instances (UDM1', UDM2'), and
**that** the reconstructed instances (UDM1', UDM2') are compared with the first and second input instances (UDM1, UDM2), wherein the amendment instance (UDM_D) is classified to be reliable if one of the reconstructed instances (UDM1') complies with the first input instance (UDM1) and the other reconstructed instance (UDM2') complies with the second input instance (UDM2).

3. Method according to any one of the preceding claims, **characterized in that** by applying the difference tool (UDM_DT) to the first and second input instance (UDM1, UDM2) a difference report (UDM_R) is generated in addition to the amendment instance (UDM_D), the difference report (UDM_R) comprising only the differentiator (D).

4. Method according to claim 3, **characterized in**
**that** the difference tool (UDM_DT) is applied to the difference report (UDM_R) and one of the first or second input instance (UDM1, UDM2), thereby generating a further reconstructed instance (UDM1", UDM2"), and
**that** the further reconstructed instance (UDM1", UDM2") is compared with the input instance (UDM1, UDM2), which has not been used for the further reconstruction, wherein the difference report (UDM_R) is classified to be reliable if the further reconstructed instance (UDM1", UDM2") complies with the input instance (UDM1, UDM2), which has not been used for the further reconstruction.

5. Method for carrying out a validation check of data of a system, in particular of a safety critical system, wherein the data are provided in form of or transformed to an UDM-formatted input instance (UDM) comprising uniments (U) and relations (R), wherein the uniments (U) each describe an element and wherein the relations (R) each connect exactly two uniments (U), the method comprising:
generating a validation instance (UDM_V) by means of a validation tool (UDM_VT) to the UDM-formatted instance (UDM),
wherein a validation rule (VR) is applied to the uniments and/or relations of the instance (UDM); and
wherein the validation instance (UDM_V) comprises a validation uniment (Uᵥₐₗ) which comprises the validation rule (VR).

6. Method according to claim 5, **characterized in that** in case a uniment (U) of the instance (UDM) to be validated is affected by a failure a validation relation (Rᵥₐₗ) is generated and added to the validation instance (UDM_V), wherein the validation relation (Rᵥₐₗ) points from the affected uniment (U) to the validation uniment (Uᵥₐₗ).

7. Method according to any one of the claims 5 to 6, **characterized in that** in case a relation (R) of the instance to be validated is affected by a failure
the uniment (U_{S}) the affected relation (R) starts from is identified; and
a validation relation (Rᵥₐₗ) is generated and added to the validation instance, wherein the validation relation (Rᵥₐₗ) points from the identified uniment (U_{S}) to the validation uniment (Uᵥₐₗ).

8. Method according to claim 6 or 7, **characterized in that** the instance (UDM) is corrected and that an evaluation of differences according to any one of the claims 1 to 7 is carried out, wherein the first instance is the instance with the affected uniment and/or relation and the second instance is the corrected instance.

9. Method according to claim to claim 6 or 7, **characterized in that** an exception uniment is created.

10. Method according to claim 6 or 7, **characterized in that** the validation rule is changed, in case the number of affected uniments exceeds a predefined number.

11. Method according to any one of the preceding claims, **characterized in that** the UDM-formatted input instances (UDM1, UDM2, UDM) are generated from foreign data (LEG) by applying a first transformer (TA) to the foreign data (LEG).

12. Method according to claim 11, **characterized in that**
the instances generated by applying the first transformer (TA) being first diverse instances (UDM_A),
that further diverse instances (UDM_B) are generated by applying a second transformer (TB) to the same foreign data (LEG),
and that the UDM-formatted diverse first instances (UDM_A) and the corresponding UDM-formatted further diverse instances (UDM_B) generated from the same foreign data (LEG) are compared, in particular by applying a MD5 check.

13. Method according to claim 12, **characterized in** the different transformers (TA, TB) use different methods and/or are executed with different operating systems.

14. Universal data model for providing data in form of an UDM-formatted instance (UDM), **characterized in that** the UDM-formatted instance comprises at least two uniments (U) and at least one relation (R), wherein the uniments (U) each describe an element, wherein the relation (R) connects exactly two uniments (U).

15. Use of the data model according to claim 14 for data preparation, data difference analysis, data validation, data configuration or data approval for a detection process, a display process, a control process, a disposition process or a supervision process, in particular within a safety critical system.

16. Use of the data model according to claim 14 or 15 within a railway system.
